# EUROPÄISCHE PATENTSCHRIFT

(11) **EP 3 377 777 B1**
(45) Veröffentlichungstag und Bekanntmachung des Hinweises auf die Patenterteilung: **09.09.2020**
(21) Anmeldenummer: 16810257.2
(22) Anmeldetag: 15.11.2016
(51) Int. Cl.: F16B 25/00

(54) **GEWINDEFORMENDE ODER GEWINDEFURCHENDE SCHRAUBE, INSBESONDERE ZUR VERWENDUNG IN LEICHTMETALL**
THREAD-FORMING OR SELF-TAPPING SCREW, IN PARTICULAR FOR USE IN LIGHT METAL
VIS DE FORMAGE DE FILETS OU DE TARAUDAGE, EN PARTICULIER POUR UTILISATION DANS DU MÉTAL LÉGER

(30) Priorität: 19.11.2015 DE 102015222889
(43) Veröffentlichungstag der Anmeldung: 26.09.2018
(73) Patentinhaber: Baier & Michels GmbH & Co. KG, 64372 Ober-Ramstadt (DE)
(72) Erfinder: AMBROS, Olaf, 68647 Biblis (DE)
(74) Vertreter: Jones Day
(86) Internationale Anmeldenummer: PCT/EP2016/077737
(87) Internationale Veröffentlichungsnummer: WO 2017/085060

(56) Entgegenhaltungen:
- EP-A1- 3 056 747
- WO-A1-2006/043169
- US-A- 3 129 963
- US-A- 3 865 006
- US-A- 5 060 740
- US-A- 5 127 784
- US-A- 5 746 039

## Beschreibung

### Technisches Gebiet

Die Erfindung betrifft eine gewindeformende oder gewindefurchende Schraube, zur Direktverschraubung in Leichtmetall oder Legierungen davon sowie in Messing oder in andere Nichteisenmetalle, aufweisend einen mit einem Gewinde mit mindestens einem asymmetrischen Gewindegang mit mehreren Windungen versehenen Schaft sowie eine Anordnung aus Schraube und Mutternbauteil.

Das gewindeformend oder gewindefurchend ausgebildete Gewinde weist, wie bei Gewinden üblich, einen Außendurchmesser, einen Kerndurchmesser und eine Gewindesteigung auf.

Der Gewindegang weist Gewindeflanken mit einem Flankenwinkel phi auf, wobei die Gewindeflanken eine Lastflanke und eine Gegenflanke aufweisen, die in einem Gewindegrund und an einer Gewindespitze unmittelbar oder mittelbar aneinander anstoßen und wobei der Flankenwinkel phiL der Lastflanke kleiner als der Flankenwinkel phiG der Gegenflanke ist. Derartige Schrauben werden insbesondere für die sogenannte Direktverschraubung verwendet, bei der die Schraube sich selbst ein Gewinde in ein Mutternbauteil formt, das zur Aufnahme der Schraube in der Regel ein entsprechendes Durchgangs- oder Sackloch aufweist.

### Stand der Technik

Aus der DE 10 2010 028 344 A1 ist eine gewindefurchende Schraube für den Einsatz in Leichtmetallwerkstoffen bekannt, welche ein asymmetrisches Gewinde mit einem Flankenwinkel von 27° bis 36° aufweist, wobei das Gewinde eine metrische Steigung aufweisen kann.

Aus der DE 10 2010 000 702 A1 ist eine Schraube bekannt, die ein Kunststoffgewinde aufweist, bei dem zwischen einzelnen Schraubenwindungen ein Abstand vorhanden ist, und bei dem der Spitzenwinkel des symmetrischen Gewindes ca. 40° beträgt und keine scharfe Gewindekante ausbildet, sondern eine Abflachung aufweist. Grundsätzlich kann die dort offenbarte Erfindung auch ein asymmetrisches Gewinde oder ein selbstschneidendes Gewinde sein.

Aus der DE 199 60 287 C1 ist eine selbstfurchende Schraube zum Eindrehen in Leichtmetall bekannt, bei der für Schrauben aus Stahl ein Flankenwinkel zwischen Last- und Rückflanke von 32° bis 42° als zweckmäßig angesehen wird, für Schrauben aus einer harten Aluminiumlegierung hingegen 58° bis 68°. Die einzelnen Gewindegänge weisen eine vom Schraubenkopf weg gerichtete Schräglage auf. Die Aufgabe einer Lastflanke wird ausführlich beschrieben, wobei das Verhältnis von Gewindesteigung zu Gewindeaußendurchmesser mit kleiner als 0,25 angegeben ist, sodass sich ein Gewinde mit eng zueinander liegenden Gewindegängen ergibt und im Bauteil eine relativ große Anzahl von Gewindegängen verankert wird.

Aus der US 5,746,039 ist eine Bohrschraube mit einem Winkel der Lastflanke von 0-15° bekannt, aus der US 3 865 006 ist eine Schraube zum Einschrauben in ein Kunststoffteil bekannt, das kein Innengewinde aufweist. Der Winkel der Lastflanke beträgt 0-20° und ist bezogen auf eine zur Mittelachse geneigte Achse der Gewindespitze, sodass insgesamt weniger als 20° erreicht werden.

Aus der nachveröffentlichten EP 3 056 747 A1 ist eine Schraube zur Befestigung eines Metallblechs an einem Holzbalken oder an einem Bauteil aus Metall bekannt. Dabei weist diese Schraube eine Spitze mit einem Gewinde mit einer kleineren Steigung auf als das tragende Gewinde.

Aus der WO 2006/043169 A1 ist eine Blechschraube bekannt, bei der der Winkel der Lastflanke in einem Bereich von 10 bis 30° liegt und der Winkel der Gegenflanke in einem Bereich von 25 bis 45° liegt.

Das Ziel der Erfindung ist eine Schraube für eine Direktverschraubung bereitzustellen mit einer ausreichenden Festigkeit und mit einem günstigen Materialfluss in dem zu verschraubenden Bauteil.

### Offenbarung der Erfindung

Eine erfindungsgemäße gewindeformende oder gewindefurchende Schraube besteht aus vergütetem Stahl, Edelstahl oder hochkorrosionsbeständigen austenitischen Werkstoffen zur Direktverschraubung in Leichtmetall oder Legierungen davon sowie in Messing oder in andere Nichteisenmetalle und weist einen Schaft mit einem asymmetrischen Gewindegang mit mehreren Windungen auf, wobei das Gewinde einen Außendurchmesser, einen Kerndurchmesser und eine Gewindesteigung aufweist. Der Gewindegang weist Gewindeflanken mit einem Flankenwinkel phi auf, wobei die Gewindeflanken eine Lastflanke und eine Gegenflanke aufweisen, die in einem Gewindegrund und an einer Gewindespitze unmittelbar oder mittelbar aneinander anstoßen und wobei der Flankenwinkel phiL der Lastflanke kleiner als der Flankenwinkel phiG der Gegenflanke ist. Der Flankenwinkel phiL der Lastflanke beträgt mindestens 25°, vorzugsweise 25° bis 35°, insbesondere 30° und der Flankenwinkel phiG der Gegenflanke beträgt mindestens 40°, vorzugsweise 40° bis 60°, insbesondere 50°, wobei der Flankenwinkel phi mindestens 65° bis höchstens 95°.

Die Gewindesteigung beträgt mindestens das 1,5-fache und höchstens das 2,5-fache der Steigung eines metrischen Gewindes desselben Nenndurchmessers. Damit lässt sich ein zügiges Einschrauben bis zum Erreichen der Kopfauflage erreichen.

Der Kerndurchmesser beträgt das 0,8-fache bis 0,95-fache des Kerndurchmessers eines metrischen Gewinde desselben Nenndurchmessers. Dadurch ergibt sich gegenüber einem metrischen Gewinde eine größere effektiv einsetzbare Profilhöhe.

Die Gegenflanke ist in eine Richtung zur Spitze hin ausgerichtet und die Lastflanke ist in eine Richtung von der Spitze weg, also zu einem Kopf der Schraube hin ausgerichtet. Unmittelbar anstoßend bedeutet in diesem Fall, dass nur herstellungsbedingte Übergangsbereiche, insbesondere Übergangsradien vorhanden sind.

Es hat sich herausgestellt, dass bei diesen Winkeln die Gewindeflanken beim Eindringen in das Mutternbauteil dessen Werkstoff vorteilhaft in Fluss versetzen und so eine große Flankenüberdeckung erzeugen, sodass eine derartige Schraube für die Direktverschraubung in Leichtmetalle oder Legierungen davon und insbesondere in Leichtmetalldruckguss besonders geeignet ist, da ein hohes Versagungsmoment erreicht wird.

Vorteilhafterweise kann das Verhältnis Q1 = P/Da von dem Außendurchmesser (Da) bezogen auf die Gewindesteigung (P) 3,0 bis 3,6 betragen, vorzugsweise 3,3 bis 3,4 und kann das Verhältnis Q2 = Dk/P von dem Kerndurchmesser (Dk) bezogen auf die Gewindesteigung (P) von 2,0 bis 2,5, vorzugsweise 2,2 bis 2,4 betragen.

Im Vergleich zu metrischen Systemen wird damit eine größere Profilfläche des Gewindes bereitgestellt, wodurch eine größere Flächenüberdeckung erreicht wird, was eine höhere Vorspannkraft erlaubt, gerade dann, wenn die Einschraubtiefe gering ist. Dies ist dann der Fall, wenn das. Gewinde eine tatsächlich tragende Länge aufweist, die weniger als das 1,5fache des Nenndurchmessers beträgt.

Vorteilhafterweise können die Lastflanke und die Gegenflanke in einem Gewindegrund mittelbar unter Ausbildung eines Übergangsbereichs mit einer Längsausdehnung von mindestens dem 0,01-fachen und höchstens dem 0,2-fachen der Steigung P aneinander anstoßen.

Vorteilhafterweise kann der Übergangsbereich an der Gewindespitze scharfkantig sein und einen Spitzenradius Rs von höchstens 0,15 mm aufweisen. Dadurch wird das Einformen der Gewindespitzen in das Mutternbauteil erleichtert. Dies ist insbesondere dann vorteilhaft, wenn bei einem Mutternbauteil mit gegossenen Kernloch eine Gusshaut vorhanden, ist, die physikalisch bedingt eine höhere Festigkeit als das Grundmaterial des Mutternbauteils aufweist.

Vorteilhafterweise kann der Übergangsbereich im Gewindegrund eine Verrundung aufweisen.

Vorteilhafterweise kann der Übergangsbereich im Gewindegrund zur Lastflanke und zur Gegenflanke einen unterschiedlichen Radius RgL und RgG aufweisen, die vorzugsweise kleiner als 1 mm sind, wobei der Radius RgL der Lastflanke im Gewindegrund um mindestens das 1,5fache und höchstens das 3fache größer als der Radius RgG der Gegenflanke ist, vorzugsweise ist der Radius RgL doppelt so groß wie der Radius RgG.

Vorteilhafterweise kann das Profil der Lastflanke und das Profil der Gegenflanke geradlinig sein. Dadurch wird die Kraftübertragung und das Einformen des Gewindes in den Werkstoff des Mutternbauteils begünstigt.

Vorteilhafterweise kann das Verhältnis des Flankenwinkels phiL der Lastflanke zu dem Flankenwinkel phiG der Gegenflanke mindestens 0,4, und höchstens 0,85, vorzugsweise 0,55 bis 0,7, insbesondere 0,6 betragen. Weiterhin kann vorteilhafterweise die Winkelhalbierende des Flankenwinkels phi mit der Senkrechten auf die Mitteachse der Schraube einen positiven Winkel in Kopfrichtung im Bereich von 2,5° bis 17,5° einschließen.

Innerhalb dieser Grenzen der asymmetrischen Gestaltung des Gewindes sind gute Eigenschaften der Verschraubung zu erwarten, da eine robuste Abstützung der Lastflanken vorliegt.

Vorteilhafterweise kann der mit dem Gewinde versehene Schaft eine kreisrunde Geometrie aufweisen. Eine kreisrunde Gewindegeometrie führt durch die über den gesamten Umfang verlaufende Flankenüberdeckung zu einer hoher Vorspannkraftübertragung, was bei einer beispielsweise trilobularen Gestaltung der Gewindegeometrie nicht der Fall ist.

Vorteilhafterweise kann der Schaft ein Einschraubende mit einem Beginn des Gewindes aufweisen und kann am Einschraubende vor dem Beginn des Gewindes eine Ansatzspitze ausgebildet sein, deren Länge La mindestens das 0,3-fache der Gewindesteigung P und deren Durchmesser DAS höchstens das 0,95-fache des Kerndurchmessers beträgt.

Dabei kann die keinen Gewindegang tragende Ansatzspitze zylindrisch oder keglig zulaufend ausgebildet sein und an der Spitze verrundet oder gefast sein.

Durch die Verwendung einer Ansatzspitze kann mit dem Einführen der Schraube in ein Befestigungsloch eine radiale Führung der Schraube beim Einschrauben sichergestellt und ein Verkanten oder ein schräges Einschrauben vermieden werden.

Vorteilhafterweise kann der Schaft ein Einschraubende mit dem Beginn des Gewindes aufweisen und kann am Einschraubende am Beginn des Gewindes über 0,5 bis 2 Windungen, vorzugsweise über 0,6 bis 0,95 Windungen eine Furchzone mit einem bezüglich der Gewindespitze und der Lastflanke vollständig ausgebildeten Gewindeprofil vorhanden sein.

Die Vorsehung einer Furchzone mit kontinuierlich ansteigendem Gewindeprofil verringert die Drehmomente zum Einfurchen des Gewindes beim Eindrehen der Schraube.

Vorteilhafterweise kann das Gewindeprofil in der Furchzone von Null bis zur vollen Höhe ansteigen. Diese Zunahme kann insbesondere kontinuierlich erfolgen und führt zur Ausbildung eines Gegengewindes im Mutternbauteil.

Vorteilhafterweise kann das Gewinde eine konische Zunahme des Außendurchmessers in Kopfrichtung aufweisen. Diese Konizität kann im Bereich von 0,5° bis 3° liegen. Dabei ist zu unterscheiden zwischen dem Konvergenzwinkel, also dem Winkel zwischen zwei Geraden, die an die Ober- und Unterkante einer zweidimensionalen Projektion der Schraube angelegt sind und dem Konuswinkel, welches der Winkel ist, der zwischen einer Parallelen zur Mittellinie einer zweidimensionalen Projektion der Schraube und einer Geraden, die an eine Kante angelegt ist, liegt. Der Konuswinkel, auch als Kegelwinkel bezeichnet, ist halb so groß wie der Konvergenzwinkel.

Die Konizität hat zur Folge, dass beim Einschrauben auch bei konischen Kernlöchern im Mutternbauteil über den Furchbereich hinausgehend ein kontinuierliches Weiterformen des Gewindes im Mutternbauteil erfolgt. Die Ausgestaltung des Kernlochs ist vom Herstellungsverfahren des Mutternbauteils abhängig, unterschiedliche Werkstoffe können ebenfalls zu unterschiedlichen Geometrien des Kernlochs führen. Durch die Konizität des Gewindes erfolgt ein Ausgleich der sich sonst bei einem konischen Kernloch mit zunehmender Einschraubtiefe verringernden Flankenüberdeckung in Kopfrichtung des Gewindes.

Ein weiterer Gegenstand der Erfindung ist eine Anordnung, bestehend aus einer Schraube wie vorstehend beschrieben und aus einem Mutternbauteil, wobei das Mutternbauteil aus Leichtmetall oder Legierungen davon oder aus Messing oder aus anderen Nichteisenmetallen besteht.

Vorteilhafterweise kann das Mutternbauteil ein gegossenes Kernloch mit einer Gusshaut aufweisen, wobei die Gusshaut eine höhere Festigkeit als das Grundmaterial des Mutternbauteils aufweist.

### Kurze Beschreibung der Zeichnungen

Die erfindungsgemäße Schraube wird anhand der Zeichnung erläutert. Es zeigen:
- Fig. 1: eine erfindungsgemäße Schraube mit einem Kopf und einer Schraubenspitze und einem Gewinde in einer Seitenansicht;
- Fig. 2: die Schraube aus Fig. 1 in einer Draufsicht auf die Schraubenspitze;
- Fig. 3: die Ausformung des Gewindes der Schraube aus Fig. 1 im Bereich einer Gewindespitze im Detail;
- Fig. 4: die Ausformung des Gewindes der Schraube aus Fig. 1 im Bereich eines Gewindegrundes im Detail;
- Fig. 5: die Ausformung des Gewindes an der Schraubenspitze im Detail;
- Fig. 6a-c: verschiedene Ausführung des Gewindes mit einer konischen Zunahme des Außendurchmessers in Kopfrichtung.

### Ausführungsform(en) der Erfindung

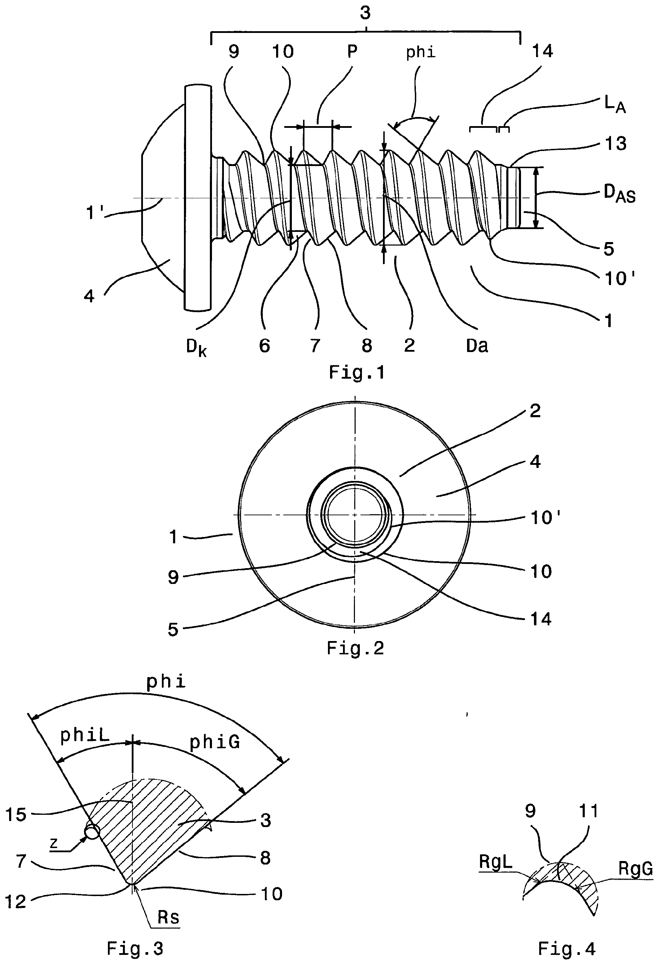

Die in Fig. 1 in einer Seitenansicht dargestellte erfindungsgemäße Schraube 1 für die Verschraubung insbesondere in Leichtmetallguss weist einen sich entlang einer Längsachse 1' erstreckenden zumindest teilweise mit einem Gewinde 2 versehenen Schaft 3 mit einem Außendurchmesser Da und einem Kerndurchmesser Dk auf. Ebenfalls dargestellt, aber für diese Erfindung nicht relevant, ist ein an einem Ende der Schraube 1 angeordneter Kopf 4 der Schraube mit nicht dargestellten innenliegenden Kraftangriffsflächen. Ein dem Kopf 4 gegenüberliegendes Einschraubende des Schafts 3 ist als Schraubenspitze 5 ausgebildet.

Der Schaft 3 wurde zur Herstellung des Gewindes 2 mit einem asymmetrischen Gewindegang 6 mit mehreren Windungen versehen, der sich mit einem voll ausgeprägten Gewindeprofil zumindest entlang eines Teils des Schaftes 3 erstreckt.

Der Gewindegang 6 weist Gewindeflanken 7, 8 mit einem Flankenwinkel phi auf, die in einem Gewindegrund 9 und an einer Gewindespitze 10 unter Ausbildung jeweils eines in den Fig. 3 und 4 erkennbaren Übergangsbereichs 11, 12 aneinander anstoßen.

Das Gewinde 2 weist einen Außendurchmesser Da, einen Kerndurchmesser Dk und eine Gewindesteigung P auf.

Die Gewindeflanke 7 ist eine Lastflanke, da sie die von der Schraube hervorgerufenen Vorspannkräfte zwischen dem Schraubenkopf 4 und dem Gewinde im Mutternbauteil aufnimmt. Die Gewindeflanke 8 ist eine Gegenflanke, die die Lastflanke 7 gegen den Kern der Schraube abstützt.

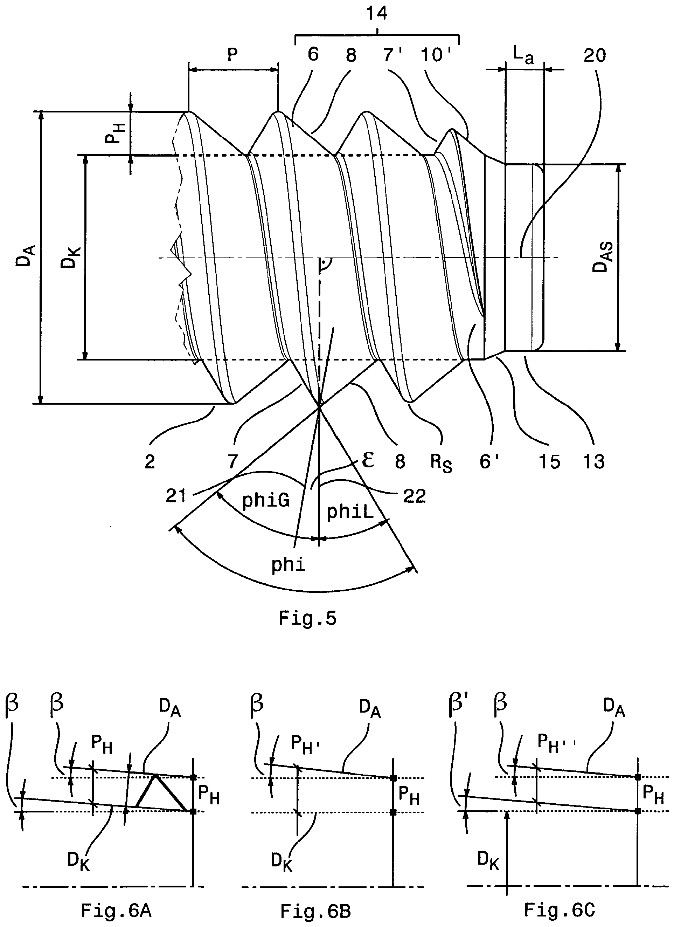

Das Gewinde 2 weist einen Flankenwinkel phi von ca. 80° auf und ist asymmetrisch ausgebildet, wobei der Flankenwinkel phiL der Lastflanke 7 mit ca. 30° kleiner als der Flankenwinkel phiG der Gegenflanke 8 mit ca. 50° ist, dargestellt in Fig. 3. Das Verhältnis des Flankenwinkels phiL der Lastflanke zu dem Flankenwinkel phiG der Gegenflanke beträgt 0,6. Da der Flankenwinkel phiL der Lastflanke kleiner als der Flankenwinkel phiG der Gegenflanke ist, erscheint das Gewinde 2 zum Kopf 4 hin gekippt, siehe dazu Fig. 5.

Die Gewindesteigung P beträgt bei einem Nenndurchmesser von 5 mm mit 1,5 mm das 1,9-fache der Steigung eines metrischen Regelgewindes desselben Nenndurchmessers, die bei diesem Nenndurchmesser 0,8 mm beträgt.

Der Kerndurchmesser beträgt mit 3,5 mm bei einem Nenndurchmesser von 5 das 0,87-fache des Kerndurchmessers eines metrischen Gewindes desselben Nenndurchmessers, der bei diesem Nenndurchmesser in der Toleranzklasse 6g 3,995 mm beträgt.

Die Schraube 1 weist am Einschraubende vor dem Beginn des Gewindes eine ohne Gewinde ausgebildete Ansatzspitze 13 mit einer Länge La auf, die etwa das 0,3-fache der Gewindesteigung P beträgt. Die Ansatzspitze 13 weist einen Durchmesser DAS auf, der etwa das 0,95-fache des Kerndurchmessers Dk beträgt.

Weiterhin weist der Schaft 3 am Einschraubende einen Beginn des Gewindes auf, welches sich wie in Fig. 2 dargestellt über ca. 320°, also über ca. 0,9 Windungen erstreckt und eine Furchzone 14 mit einem bezüglich der Gewindespitze und der Lastflanke vollständig ausgebildeten Gewindeprofil 10' bildet. In der Furchzone 14 ist ein Profil des Gewindeganges mit einer mehr oder weniger gleichmäßig ansteigenden Kontur des Außendurchmessers vorhanden, was zu einem fortschreitenden Einformen des Gewindes in das Mutternbauteil führt.

Es ist in der Furchzone 14 allerdings unerheblich, ob die Gegenflanke schon vollständig ausgebildet ist. Das an den Furchbereich 14 anschließende Gewinde 2 begünstigt die weitere Ausformung des mittels des Furchbereichs 14 in das Mutternteil eingebrachten Mutterngewindes und ist somit ebenfalls gewindeformend oder gewindefurchend ausgebildet, auch wenn die hauptsächliche Verformung durch den Furchbereich 14 erfolgt und anschließend ein Glätten und Kalibrieren stattfindet.

Bei einem in Kopfrichtung zunehmenden Außendurchmesser des Gewindes, wie es etwa durch eine Konizität (Fig. 6a-c) bereitgestellt werden kann, erfolgt auch nach dem Furchbereich noch ein weiteres Verformen des Werkstoffes des Mutternbauteils mit fortschreitendem Eindringen der Schraube in das Mutternbauteil.

Fig. 2 zeigt die Schraube aus Fig. 1 in einer Draufsicht auf die Schraubenspitze 5. Es ist zu erkennen, dass das Gewinde 2 eine kreisrunde Geometrie mit den Gewindespitzen 10 und dem Gewindegrund 9 aufweist, ebenso wie der Kopf 4, was hier ohne Bedeutung für die Erfindung ist.

Im Furchbereich 14 verläuft das Gewindeprofil 10' ausgehend von dem Gewindegrund 9 mit dem Kerndurchmesser Dk (Fig. 1) mit einer Höhe der Gewindespitze von Null bis zur vollen Höhe der Gewindespitzen 10 auf dem Außendurchmesser Da (Fig. 1).

Das Verhältnis Q1 = Da/P von dem Außendurchmesser Da bezogen auf die Gewindesteigung P beträgt bei einem Außendurchmesser Da von 5 und einer Gewindesteigung P von 1,5 ca. 3,3 und das Verhältnis Q2 = Dk/P von dem Kerndurchmesser Dk von 3,5 bezogen auf die Gewindesteigung P beträgt ca. 2,3.

In Fig. 3 ist erkennbar, dass das Profil der Lastflanke 7 und das Profil der Gegenflanke 8 geradlinig ist und dass die Lastflanke 7 und die Gegenflanke 8 in dem Gewindegrund 9 und an der Gewindespitze 10 mittelbar unter Ausbildung eines Übergangsbereichs 11, 12 mit einer Längsausdehnung von etwa dem 0,01-fachen der Steigung P an der Gewindespitze 10 und höchstens dem 0,2-fachen der Steigung P im Gewindegrund 9 aneinander anstoßen.

Der Übergangsbereich 12 an der Gewindespitze 10 soll dabei möglichst scharfkantig sein, was mit einem Spitzenradius Rs von höchstens 0,15 mm gegeben ist.

Wie bereits erläutert teilt sich der Flankenwinkel phi asymmetrisch auf, wobei der Flankenwinkel phiL der Lastflanke 7 gegenüber einer Senkrechten 15 zu der Längsachse 1' der Schraube 1 angegeben ist und kleiner als der Flankenwinkel phiG der Gegenflanke 8 ist, der auch gegenüber der Senkrechten 15 zu der Längsachse 1' der Schraube 1 angegeben ist, allerdings in die andere Richtung.

Der in Fig. 4 im Detail Z aus Fig. 3 dargestellte Übergangsbereich 11 im Gewindegrund 9 weist eine Verrundung auf, wobei zur Lastflanke 7 und zur Gegenflanke 8 ein unterschiedlicher Radius RgL und RgG vorliegt, der hier 0,05 und 0,1 mm beträgt. Der Radius RgL im Gewindegrund der Lastflanke 7 ist damit doppelt so groß wie der Radius RgG der Gegenflanke 8.

In Fig. 5 ist das Einschraubende der Schraube 1 aus Fig. 1 im Detail dargestellt. Vor dem Beginn des Gewindes 2 ist eine ohne Gewinde ausgebildete Ansatzspitze 13 mit einer Länge La auf, die etwa das 0,4-fache der Gewindesteigung P beträgt. Die Ansatzspitze 13 weist einen Durchmesser DAS auf, der etwa das 0,9-fache des Kerndurchmessers Dk beträgt.

Weiterhin weist der Schaft 3 am Einschraubende einen Beginn des Gewindes mit einem Gewindegang 6' auf, der ein von Null bis zur Profilhöhe Ph ansteigendes Gewindeprofil besitzt und der sich, wie in Fig. 2 dargestellt, über ca. 320°, also über ca. 0,9 Windungen erstreckt und eine Furchzone 14 bildet. Das Gewindeprofil des Gewindeganges 6' ist bezüglich der Gewindespitze 10' und der Lastflanke 7 vollständig ausgebildet, die Lastflanke 7' schließt aber in der Furchzone 14 nicht unmittelbar and die Gegenflanke 8 des nachfolgenden Gewindeganges 6 an, sondern es ist ein Abstand vorhanden, sodass auch die Furchzone 14 die Steigung P aufweist.

Im tragenden Bereich des Gewindes, der an die Furchzone 14 anschließt, ist die Profilhöhe Ph gegenüber einem metrischen Gewinde um das 1,05-fache bis 1,5-fache gesteigert, beispielsweise bei DN 5 um das 1,1-fache. Dies wird dadurch erreicht, dass der Kerndurchmesser Dk kleiner als bei einem metrischen Gewinde ist.

Zwischen der Furchzone 14 und der Ansatzspitze 13 ist ein Übergangsbereich 15, der im vorliegenden Fall konisch ausgebildet ist. In der Furchzone 14 wächst der Durchmesser von dem Durchmesser DAS auf den Kerndurchmessers Dk an. Die Ansatzspitze selbst ist abgerundet, es ist aber auch möglich, eine Fase vorzusehen.

Ausgehend vom Winkel phiL der Lastflanke 7 von 30° und dem Winkel phiG der Gegenflanke 8 von 50° ergibt sich der Flankenwinkel phi von 80° und die Winkelhalbierende 21 des Flankenwinkels phi mit einer Senkrechten 22 auf einer Mitteachse 20 der Schraube schließt einen positiven Winkel epsilon von 10° in Kopfrichtung ein.

Fig. 6A-C zeigen drei verschiedene Ausführung des Gewindes mit einer konischen Zunahme des Außendurchmessers Da in Kopfrichtung. Fig. 6A zeigt eine Zunahme des Kerndurchmessers Dk und des Außendurchmessers Da mit einem Konuswinkel beta bei gleichbleibender Steigung und Profilhöhe Ph.

Fig. 6B zeigt eine Zunahme der Profilhöhe Ph mit einem Konuswinkel beta des Außendurchmessers Da bei gleichbleibendem Kerndurchmesser Dk, Fig. 6C zeigt eine Zunahme des Profilhöhe Ph und des Kerndurchmessers Dk, wobei die Konuswinkel beta' des Kerndurchmessers Dk kleiner als der Konuswinkel beta des Außendurchmessers Da ist.

Als Schraubenwerkstoff kommen vergüteter Stahl, Edelstähle oder hochkorrosionsbeständige austenitische Werkstoffe in Betracht.

## Patentansprüche

1. Gewindeformende oder gewindefurchende Schraube (1) aus vergütetem Stahl, Edelstahl oder hochkorrosionsbeständigen austenitischen Werkstoffen zur Direktverschraubung in Leichtmetall oder Legierungen davon sowie in Messing oder in andere Nichteisenmetalle, aufweisend einen mit einem Gewinde (2) mit mindestens einem asymmetrischen Gewindegang (4) mit mehreren Windungen versehenen Schaft (5), wobei das Gewinde (2) einen Außendurchmesser (Da), einen Kerndurchmesser (Dk) und eine Gewindesteigung (P) aufweist, wobei der Gewindegang (4) Gewindeflanken (7,8) mit einem Flankenwinkel phi aufweist, wobei die Gewindeflanken (7,8) eine Lastflanke (7) und eine Gegenflanke (8) aufweisen, die in einem Gewindegrund (9) und an einer Gewindespitze (10) unmittelbar oder mittelbar aneinander anstoßen und wobei ein Flankenwinkel phiL der Lastflanke (7) kleiner als ein Flankenwinkel phiG der Gegenflanke (8) ist, wobei der Flankenwinkel phiL der Lastflanke (7) mindestens 25° und der Flankenwinkel phiG der Gegenflanke (8) mindestens 40° beträgt, wobei der Flankenwinkel phi mindestens 65° bis höchstens 95° beträgt, wobei die Gewindesteigung P mindestens das 1,5-fache und höchstens das 2,5-fache der Steigung eines metrischen Gewindes desselben Nenndurchmessers beträgt und wobei der Kerndurchmesser Dk das 0,8-fache bis 0,95-fache des Kerndurchmessers eines metrischen Gewindes desselben Nenndurchmessers beträgt.

2. Schraube nach Anspruch 1, **dadurch gekennzeichnet, dass** das Verhältnis Q1 = Da/P von dem Außendurchmesser (Da) bezogen auf die Gewindesteigung (P) von 3,0 bis 3,6 beträgt und dass das Verhältnis Q2 = Dk/P von dem Kerndurchmesser (Dk) bezogen auf die Gewindesteigung (P) von 2,0 bis 2,5 beträgt.

3. Schraube nach einem der Ansprüche 1 bis 2, **dadurch gekennzeichnet, dass** die Lastflanke (7) und die Gegenflanke (8) in einem Gewindegrund (9) und/oder an einer Gewindespitze (10) mittelbar unter Ausbildung eines Übergangsbereichs (11, 12) mit einer Längsausdehnung von mindestens dem 0,01-fachen und höchstens dem 0,2-fachen der Steigung P aneinander anstoßen.

4. Schraube nach Anspruch 3, **dadurch gekennzeichnet, dass** der Übergangsbereich (12) an der Gewindespitze (10) scharfkantig ist und einen Spitzenradius Rs von höchstens 0,15 mm aufweist.

5. Schraube nach Anspruch 3 oder 4, **dadurch gekennzeichnet, dass** der Übergangsbereich (11) im Gewindegrund (9) eine Verrundung aufweist.

6. Schraube nach Anspruch 5, **dadurch gekennzeichnet, dass** der Übergangsbereich (11) im Gewindegrund (9) zur Lastflanke (7) und zur Gegenflanke (8) einen unterschiedlichen Radius RgL und RgG aufweisen, wobei der Radius RgL der Lastflanke (7) im Gewindegrund (9) um mindestens das 1,5fache und höchstens das 3fache größer als der Radius RgG der Gegenflanke (8) ist.

7. Schraube nach einem der Ansprüche 1 bis 6, **dadurch gekennzeichnet, dass** das Profil der Lastflanke (7) und das Profil der Gegenflanke (8) geradlinig ist.

8. Schraube nach einem der Ansprüche 1 bis 7, **dadurch gekennzeichnet, dass** das Verhältnis des Flankenwinkels phiL der Lastflanke (7) zu dem Flankenwinkel phiG der Gegenflanke (8) mindestens 0,4, und höchstens 0,85 beträgt.

9. Schraube nach einem der Ansprüche 1 bis 8, **dadurch gekennzeichnet, dass** die Winkelhalbierende (21) des Flankenwinkels phi mit der Senkrechten (22) auf die Mittelachse (20) der Schraube einen positiven Winkel epsilon in Kopfrichtung im Bereich von 2,5° bis 17,5° einschließt.

10. Schraube nach einem der Ansprüche 1 bis 9, **dadurch gekennzeichnet, dass** der mit einem Gewinde (2) versehene Schaft (3) eine kreisrunde Geometrie aufweist.

11. Schraube nach einem der Ansprüche 1 bis 10, **dadurch gekennzeichnet, dass** der Schaft (1) ein Einschraubende mit einem Beginn des Gewindes (2) aufweist und dass am Einschraubende vor dem Beginn des Gewindes (2) eine Ansatzspitze (13) ausgebildet ist, dass die Länge La der Ansatzspitze (13) mindestens das 0,3-fache der Gewindesteigung P und dass der Durchmesser DAS der Ansatzspitze (13) höchstens das 0,95-fache des Kerndurchmessers (Dk) beträgt.

12. Schraube nach einem der Ansprüche 1 bis 11, **dadurch gekennzeichnet, dass** der Schaft (1) ein Einschraubende mit dem Beginn des Gewindes (2) aufweist und dass am Einschraubende am Beginn des Gewindes (2) über 0,5 bis 2 Windungen eine Furchzone (14) mit einem bezüglich der Gewindespitze (10') und der Lastflanke (7') vollständig ausgebildeten Gewindeprofil vorhanden ist.

13. Schraube nach Anspruch 12, **dadurch gekennzeichnet, dass** das Gewindeprofil in der Furchzone (14) von Null bis zur vollen Profilhöhe Ph ansteigen.

14. Schraube nach einem der Ansprüche 1 bis 13, **dadurch gekennzeichnet, dass** das Gewinde (2) eine konische Zunahme des Außendurchmessers in Kopfrichtung aufweist.

15. Anordnung, bestehend aus einer Schraube nach einem der Ansprüche 1 bis 14 und aus einem Mutternbauteil, **dadurch gekennzeichnet, dass** das Mutternbauteil aus Leichtmetall oder Legierungen davon oder aus Messing oder aus anderen Nichteisenmetallen besteht.

16. Anordnung nach Anspruch 15, **dadurch gekennzeichnet, dass** die Schraube nach Anspruch 4 ausgebildet ist und dass das Mutternbauteil ein gegossenes Kernloch mit einer Gusshaut aufweist, wobei die Gusshaut eine höhere Festigkeit als das Grundmaterial des Mutternbauteils aufweist.

## Claims

1. A thread-forming or self-tapping screw (1) made of hardened and tempered steel, stainless steel or highly corrosion-resistant austenitic materials for direct screw connection into light metal or alloys thereof and into brass or into other non-ferrous metals, having a shank (5) provided with a thread (2) having at least one asymmetric thread turn (4) with a plurality of windings (5), wherein the thread (2) has an external diameter (Da), a core diameter (Dk) and a thread pitch (P), wherein the thread turn (4) has thread flanks (7,8) with a flank angle phi, wherein the thread flanks (7,8) have a load-bearing flank (7) and a counter-flank (8) which abut one another directly or indirectly in a thread bottom (9) and at a thread tip (10) and wherein a flank angle phiL of the load-bearing flank (7) is smaller than a flank angle phiG of the counter-flank (8), wherein the flank angle phiL of the load-bearing flank (7) is at least 25° and the flank angle phiG of the counter-flank (8) is at least 40°, wherein the flank angle phi is at least 65° to at most 95°, wherein the thread pitch P is at least 1.5 times and at most 2.5 times the pitch of a metric thread of the same nominal diameter and wherein the core diameter Dk is 0.8 times to 0.95 times the core diameter of a metric thread of the same nominal diameter.

2. The screw according to Claim 1, **characterized in that** the ratio Q1 = Da/P of the external diameter (Da) in relation to the thread pitch (P) is from 3.0 to 3.6 and the ratio Q2 = Dk/P of the core diameter (Dk) in relation to the thread pitch (P) is from 2.0 to 2.5.

3. The screw according to any one of Claims 1 to 2, **characterized in that** the load-bearing flank (7) and the counter-flank (8) abut one another in a thread bottom (9) and/or at a thread tip (10) indirectly forming a transition region (11, 12) with a longitudinal extension of at least 0.01 times and at most 0.2 times the pitch P.

4. The screw according to Claim 3, **characterized in that** the transition region (12) is sharp-edged at the thread tip (10) and has a tip radius Rs of at most 0.15 mm.

5. The screw according to Claim 3 or 4, **characterized in that** the transition region (11) has a fillet in the thread bottom (9).

6. The screw according to Claim 5, **characterized in that** the transition region (11) has a different radius RgL and RgG in the thread bottom (9) for the load-bearing flank (7) and for the counter-flank (8), wherein the radius RgL of the load-bearing flank (7) in the thread bottom (9) is greater than the radius RgG of the counter-flank (8) by at least 1.5 times and at most 3 times.

7. The screw according to any one of Claims 1 to 6, **characterized in that** the profile of the load-bearing flank (7) and the profile of the counter-flank (8) is rectilinear.

8. The screw according to any one of Claims 1 to 7, **characterized in that** the ratio of the flank angle phiL of the load-bearing flank (7) to the flank angle phiG of the counter-flank (8) is at least 0.4 and at most 0.85.

9. The screw according to any one of Claims 1 to 8, **characterized in that** the angle bisector (21) of the flank angle phi with the perpendicular (22) to the central axis (20) of the screw forms a positive angle epsilon in the head direction in the range of 2.5° to 17.5°.

10. The screw according to any one of Claims 1 to 9, **characterized in that** the shank (3) provided with a thread (2) has a circular geometry.

11. The screw according to any one of Claims 1 to 10, **characterized in that** the shank (1) has a threaded end with a beginning of the thread (2) and an attachment tip (13) is formed at the threaded end before the beginning of the thread (2), the length La of the attachment tip (13) is at least 0.3 times the thread pitch P, and the diameter DAS of the attachment tip (13) is at most 0.95 times the core diameter (Dk).

12. The screw according to any one of Claims 1 to 11, **characterized in that** the shank (1) has a threaded end with the beginning of the thread (2) and a groove region (14) is present with a thread profile fully formed in relation to the thread tip (10') and to the load-bearing flank (7') at the threaded end at the beginning of the thread (2) over 0.5 to 2 windings.

13. The screw according to Claim 12, **characterized in that** the thread profile increases in the groove region (14) from zero to a full profile height Ph.

14. The screw according to any one of Claims 1 to 13, **characterized in that** the thread (2) has a conical increase of the external diameter in the head direction.

15. An arrangement consisting of a screw according to any one of Claims 1 to 14 and of a nut component, **characterized in that** the nut component consists of light metal or alloys thereof or of brass or of other non-ferrous metals.

16. The arrangement according to Claim 15, **characterized in that** the screw is formed according to Claim 4 and the nut component has a cast core hole having a cast skin, wherein the cast skin has a greater strength than the base material of the nut component.

## Revendications

1. Vis autoformeuse ou autotaraudeuse (1) à base d'acier trempé et revenu, d'acier inoxydable ou de matériaux austénitiques hautement résistants à la corrosion à visser directement dans un métal léger ou ses alliages ainsi que dans du laiton ou dans d'autres métaux non ferreux, présentant une tige (5) dotée d'un filetage (2) avec au moins un filet asymétrique (4) à plusieurs spires, dans laquelle le filetage (2) présente un diamètre extérieur (Da), un diamètre à fond de filet (Dk) et un pas de vis (P), dans laquelle le filet (4) présente des flancs de filet (7, 8) avec un angle de flanc phi, dans laquelle les flancs de filet (7, 8) présentent un flanc de charge (7) et un flanc conjugué (8), qui sont directement ou indirectement contigus l'un l'autre dans un fond de filet (9) et à une arête de filet (10) et dans laquelle un angle de flanc phiL du flanc de charge (7) est plus petit qu'un angle de flanc phiG du flanc conjugué (8), dans laquelle l'angle de flanc phiL du flanc de charge (7) est d'au moins 25° et l'angle de flanc phiG du flanc conjugué (8) est d'au moins 40°, dans laquelle l'angle de flanc phi est d'au moins 65° à 95° au maximum, dans laquelle le pas de vis P atteint au moins 1,5 fois et au plus 2,5 fois le pas d'un filetage métrique du même diamètre nominal et dans laquelle le diamètre à fond de filet Dk est de 0,8 fois à 0,95 fois le diamètre à fond de filet d'un filetage métrique du même diamètre nominal.

2. Vis selon la revendication 1, **caractérisée en ce que** le rapport Q1 = Da/P du diamètre extérieur (Da) par le pas de vis (P) est de 3,0 à 3,6 et que le rapport Q2 = Dk/P du diamètre à fond de filet (Dk) par le pas de vis (P) est de 2,0 à 2,5.

3. Vis selon l'une quelconque des revendications 1 à 2, **caractérisée en ce que** le flanc de charge (7) et le flanc conjugué (8) sont indirectement contigus l'un l'autre dans un fond de filet (9) et/ou à une arête de filet (10) moyennant la formation d'une zone de transition (11, 12) avec une extension longitudinale d'au moins 0,01 fois et au plus 0,2 fois le pas de vis P.

4. Vis selon la revendication 3, **caractérisée en ce que** la zone de transition (12) à l'arête de filet (10) est à angle vif et présente un rayon d'arête Rs de 0,15 mm au maximum.

5. Vis selon la revendication 3 ou 4, **caractérisée en ce que** la zone de transition (11) dans le fond de filet (9) présente un congé de raccordement.

6. Vis selon la revendication 5, **caractérisée en ce que** la zone de transition (11) dans le fond de filet (9) présente un rayon différent RgL et RgG par rapport au flanc de charge (7) et par rapport au flanc conjugué (8), dans laquelle le rayon RgL du flanc de charge (7) est d'au moins 1,5 fois et au plus de 3 fois plus grand que le rayon RgG du flanc conjugué (8) dans le fond de filet (9).

7. Vis selon l'une quelconque des revendications 1 à 6, **caractérisée en ce que** le profil du flanc de charge (7) et le profil du flanc conjugué (8) sont rectilignes.

8. Vis selon l'une quelconque des revendications 1 à 7, **caractérisée en ce que** le rapport de l'angle de flanc phiL du flanc de charge (7) par l'angle de flanc phiG du flanc conjugué (8) atteint au moins 0,4 et au plus 0,85.

9. Vis selon l'une quelconque des revendications 1 à 8, **caractérisée en ce que** la bissectrice (21) de l'angle de flanc phi forme un angle positif epsilon de l'ordre de 2,5° à 17,5° avec la perpendiculaire (22) sur l'axe central (20) de la vis en direction de sa tête.

10. Vis selon l'une quelconque des revendications 1 à 9, **caractérisée en ce que** la tige (3) dotée d'un filetage (2) présente une géométrie circulaire.

11. Vis selon l'une quelconque des revendications 1 à 10, **caractérisée en ce que** la tige (1) présente une extrémité insérée avec un début du filetage (2) et qu'un embout de pointe (13) est formé à l'extrémité insérée avant le début du filetage (2), que la longueur La de l'embout de pointe (13) est d'au moins 0,3 fois le pas de vis P et que le diamètre D_{AS} de l'embout de pointe (13) est au plus de 0,95 fois le diamètre à fond de filet (Dk).

12. Vis selon l'une quelconque des revendications 1 à 11, **caractérisée en ce que** la tige (1) présente une extrémité insérée avec un début du filetage (2) et qu'une zone taraudée (14) existe à l'extrémité insérée au début du filetage (2) sur 0,5 à 2 spires avec un profil de filetage complètement formé par rapport à l'arête de filet (10') et au flanc de charge (7').

13. Vis selon la revendication 12, **caractérisée en ce que** le profil de filetage dans la zone taraudée (14) progresse de zéro jusqu'à la hauteur de profil complète Ph.

14. Vis selon l'une quelconque des revendications 1 à 13, **caractérisée en ce que** le filetage (2) présente une progression conique du diamètre extérieur en direction de la tête.

15. Arrangement comprenant une vis selon l'une quelconque des revendications 1 à 14 et d'un composant à écrou, **caractérisé en ce que** le composant à écrou est constitué à base d'un métal léger ou de ses alliages ou de laiton ou d'autres métaux non ferreux.

16. Arrangement selon la revendication 15, **caractérisé en ce que** la vis est conçue selon la revendication 4 et que le composant à écrou présente un avant-trou coulé avec une peau de coulée, dans lequel la peau de coulée présente une résistance supérieure au matériau de base du composant à écrou.
